# FASCICULE DE BREVET EUROPEEN

(11) **EP 2 975 362 B1**
(45) Date de publication et mention de la délivrance du brevet: **05.12.2018**
(21) Numéro de dépôt: 15176331.5
(22) Date de dépôt: 10.07.2015
(51) Int. Cl.: G01C 21/20, G08G 5/00, G07C 5/00, B64D 45/00, G07C 5/08

(54) **CALCUL DE PERFORMANCE POUR AERONEF**
LEISTUNGBERECHNUNG FÜR EIN LUFTFAHRZEUG
PERFORMANCE CALCULATION FOR AN AIRCRAFT

(30) Priorité: 18.07.2014 FR 1401621
(43) Date de publication de la demande: 20.01.2016
(73) Titulaire: THALES, 92400 Courbevoie (FR)
(72) Inventeur: Fournier, François, 31036 TOULOUSE CEDEX 1 (FR); Le Reun, Heloïse, 31036 TOULOUSE CEDEX 1 (FR); Boyer, Marc, 31036 TOULOUSE CEDEX 1 (FR)
(74) Mandataire: Lucas, Laurent Jacques

(56) Documents cités:
- EP-A2- 2 196 775
- WO-A2-2011/114278
- US-A1- 2008 077 290
- US-A1- 2010 214 130

## Description

### Domaine de l'invention

L'invention concerne le domaine de l'avionique et en particulier celui du calcul de performance pour aéronef.

### Etat de la Technique

Le "calcul de performance" pour un aéronef, par exemple un avion, désigne l'ensemble des opérations consistant à calculer un certain nombre de valeurs requises pour le vol ou la mission. Ce calcul par exemple peut comprendre la détermination ou la vérification de la valeur de la vitesse de décollage, de la vitesse limite, de la masse au décollage, de la longueur de piste au décollage ou à l'atterrissage, etc. Les calculs s'effectuent à l'aide d'abaques ou généralement à l'aide de calculateurs de bord et/ou de logiciels spécialisés, principalement lors de la préparation du vol ou de la mission.

Dans les détails, en fonction du contexte spécifique associé à chaque avion, du contexte aéroportuaire propre à chaque aéroport et d'autres variables d'environnement de vol, les données d'entrée à utiliser pour le calcul de performances, peuvent différer sensiblement, rendant les calculs complexes.

Les solutions existantes pour l'établissement du calcul de performances présentent des limitations, des défauts, des lenteurs, des sous-optimisations et corollairement augmentent les risques d'erreurs.

En particulier, les solutions existantes nécessitent ou exigent de nombreuses opérations manuelles, généralement fastidieuses et inutilement fatigantes, de la part du pilote. La manipulation de la documentation sous forme papier par exemple ralentit significativement les opérations.

Il existe un besoin pour des procédés et systèmes améliorant ce calcul de performances. Le document WO 2011/114278 A2 divulgue un système biométrique comprenant un senseur biométrique de type optique à des fins d'authentification. Le document US 2010/0214130 A1 divulgue un système d'acquisition en temps réel d'information à partir d'images d'instruments d'un véhicule, comprenant des moyens adaptés pour pallier aux effets de variation de la lumière ambiante.

### Résumé de l'invention

Il est divulgué un procédé mis en oeuvre par ordinateur de calcul de performances pour un aéronef, comprenant les étapes consistant à collecter ou recevoir des données depuis une pluralité de sources de données, ces sources comprenant des sources de données de type avionique et des sources de données de type non-avionique (par exemple des sources de données externes); acquérir une ou plusieurs images dans le cockpit de l'aéronef, ledit cockpit comprenant un ou plusieurs équipements de pilotage comprenant un ou plusieurs écrans de visualisation; extraire des données depuis au moins l'une desdites une ou plusieurs images acquises dans le cockpit de l'aéronef par reconnaissance de caractères au sein de ladite image; traiter les données collectées et les données traitées dans un appareil électronique de type EFB ou sac de vol électronique; et procéder au calcul de performances (proprement dit, la terminologie étant consacrée).

Dans un développement, l'étape consistant à collecter des données comprend une étape consistant à acquérir une ou plusieurs images dans le cockpit de l'aéronef, ledit cockpit comprenant un ou plusieurs écrans de visualisation, et une étape consistant à extraire des données depuis au moins une image acquise dans le cockpit.

Par exemple, un écran peut être un Multi Purpose Display Unit (MCDU).

L'extraction de données (par exemple textuelles) peut se faire par "scraping" (confer ci-après). Peuvent être extraites des données telles que du texte, des valeurs numériques, des positions de curseurs ou de cadran, etc.

Dans un développement, l'étape consistant à collecter des données comprend une étape consistant à extraire des données depuis un flux audio.

Par exemple, il pourra être procédé à la reconnaissance de la parole dans un flux audio, puis à la transcription en texte de ce flux audio. Cette extraction depuis un flux audio (par exemple émis par l'aéroport) peut se faire en complément (ou en substitution) de l'étape d'extraction de données depuis des images.

Dans un développement, les données collectées comprennent une ou plusieurs données de type alarme, INOP, statut avion, air conditionné et antigivre, piste, ATIS, météorologique et/ou NOTAM.

Dans un développement, l'étape de traitement comprend une ou plusieurs opérations parmi des opérations d'interprétation, de filtrage et de conversion de données.

Dans un développement, les sources de données avioniques sont transmises par les équipements d'interface de l'aéronef depuis des données issues d'un FPS (ou système de planification de vol ou "Flight Planning System") et/ou d'un CMS (ou système de maintenance centralisée ou "Centralized Maintenance System").

Dans un développement, les sources de données externes sont transmises par un ou plusieurs serveurs sol et les données externes comprenant des données de type météorologiques et/ou de notices NOTAM.

Dans un développement, les sources de données externes comprennent en outre des données issues du réseau Internet (par exemple, des données météorologiques locales).

Dans un développement, l'opération d'interprétation des données collectées s'effectuent au moyen d'un modèle de protocoles avioniques.

Dans un développement, l'opération de conversion des données collectées s'effectuent au moyen d'un fichier de conversion prédéfini.

Dans un développement, l'étape consistant à procéder au calcul de performances est précédé par la réception d'une correction ou de la validation d'une ou de plusieurs données par le pilote pour le calcul de performances.

Il est divulgué un produit programme d'ordinateur, ledit programme d'ordinateur comprenant des instructions de code permettant d'effectuer les étapes du procédé selon l'une quelconque des étapes du procédé, lorsque ledit programme est exécuté sur un ordinateur.

Il est divulgué un système comprenant des moyens pour mettre en oeuvre une ou plusieurs étapes du procédé.

Selon un aspect de l'invention, les différentes données pertinentes au calcul de performances sont avantageusement centralisées (notamment les données de statut avion, alarmes, météo, NOTAM, poids, piste, poids, ATIS).

Selon un autre aspect de l'invention, les données sont distribuées et vérifiées de manière appropriée: les données pertinentes sont sélectionnées et traitées pour optimiser le calcul des performances.

Avantageusement, des modes de réalisation optimisent la charge cognitive du pilote, lequel se voit déchargé d'un certain nombre de tâches fastidieuses et peut à l'inverse se concentrer sur des tâches intellectuelles plus critiques pour le vol. Par exemple, les tâches d'identification et de gestion par le pilote du contexte spécifique d'un vol sont facilitées (les données permettant le calcul sont recherchées et intégrées au calcul de performances).

Avantageusement, des modes de réalisation établissent un lien direct la fonction de calcul de performances et les différentes données associées au contexte avion, au contexte aéroport et au contexte de l'environnement de vol.

Avantageusement, la solution permet de prendre en compte directement les informations de contexte avion ou d'alarmes, les informations aéroport et les informations météo et d'indiquer au pilote rapidement les bonnes données d'entrée pour ses calculs.

Avantageusement, le pilote diminue sa charge d'entrée de données et peut se concentrer uniquement sur la vérification des données.

Selon un aspect de l'invention, la sécurité et l'intégrité des données sont avantageusement gérées. Certains modes de réalisation permettent en effet de réaliser une passerelle ou une articulation avantageuse entre un environnement plutôt "ouvert" c'est-à-dire non certifié (e.g. EFB, Flight Planning System) et un environnement avionique plutôt "fermé", c'est à dire certifié et régulé (FMS, équipement interface).

### Description des figures

Différents aspects et avantages de l'invention vont apparaitre en appui de la description d'un mode préféré d'implémentation de l'invention mais non limitatif, avec référence aux figures ci-dessous :
La figure 1 illustre l'environnement technique global de l'invention;
La figure 2 présente une vue d'ensemble du procédé selon l'invention;
La figure 3 détaille certains aspects du procédé selon l'invention.

### Description détaillée de l'invention

Certains termes et environnements techniques sont définis ci-après.

Un ""Electronic Flight Bag" d'acronyme ou sigle EFB correspond désigne des librairies électroniques embarquées. Généralement traduit par "sac de vol électronique" ou "sacoche de vol électronique" ou "tablette de vol électronique", un EFB est un appareil électronique portable et utilisé par le personnel navigant (par exemple pilotes, maintenance, cabine..). Un EFB peut fournir des informations de vol à l'équipage, aidant celui-ci à effectuer des tâches (avec de moins de papiers). En pratique, il s'agit généralement d'une tablette informatique du commerce. Une ou plusieurs applications permettent la gestion de l'information pour des tâches de gestion de vol. Ces plateformes informatiques d'usage général sont destinées à réduire ou remplacer le matériel de référence sous forme papier, souvent trouvés dans le bagage à main du "Pilot Flight Bag" et dont la manipulation peut être fastidieuse. La documentation papier de référence comprend généralement les manuels de pilotage, les différentes cartes de navigation et les manuels d'opérations au sol. Ces documentations sont avantageusement dématérialisées dans un EFB. En outre, un EFB peut héberger des applications logicielles spécialement conçues pour automatiser des opérations conduites manuellement en temps normal, comme par exemple les calculs de performances de décollage (calcul de vitesse limite, etc). Différentes classes de matériel EFB existent. Les EFB de classe 1 sont des appareils électroniques portatifs (PED), qui ne sont normalement pas utilisés durant le décollage et les opérations de débarquement. Cette classe d'appareil ne nécessite pas un processus administratif de certification ou d'autorisation particulière. Les appareils EFB de classe 2 sont normalement disposés dans le cockpit, e.g. montés dans une position où ils sont utilisés durant toutes les phases de vol. Cette classe d'appareils nécessite une autorisation d'utilisation préalable. Les appareils de classe 1 et 2 sont considérés comme des appareils électroniques portatifs. Des installations fixes de classe 3, telles que des supports informatiques ou des stations d'accueil fixes installées dans le cockpit des aéronefs exigent généralement l'approbation et une certification de la part du régulateur.

L'acronyme ou sigle FMS correspond à la terminologie anglaise "Flight Management System" et désigne le "système de gestion de vol" d'un aéronef. En particulier, l'acronyme désigne le calculateur de bord. Lors de la préparation d'un vol ou lors d'un déroutement, l'équipage procède à la saisie de différentes informations relatives au déroulement du vol, typiquement en utilisant un dispositif de gestion de vol d'un aéronef FMS. Un FMS comprend des moyens de saisie et des moyens d'affichage, ainsi que des moyens de calcul.

L'acronyme ou sigle FPS correspond à la terminologie anglaise "Flight Planning System" et désigne le "système de planification de vol" d'un aéronef. Ce système gère en particulier la consommation de carburant et les exigences ATC (Air Traffic Control).

L'acronyme IHM correspond à "Interface Homme-Machine" (HMI en anglais, "Human Machine Interface"). La saisie des informations et l'affichage des informations saisies ou calculées par les moyens d'affichage, constituent une telle interface homme-machine. De manière générale, les moyens IHM permettent la saisie et la consultation des informations de plan de vol.

Le terme "Centralized Maintenance System" d'acronyme CMS, désigne un système centralisé de maintenance, qui assure en particulier la maintenance d'un aéronef au sol, maintenance qui comprend différentes étapes, comprenant en premier lieu le renseignement par le personnel de bord d'un registre de vol, ou "Logbook" selon le terme anglais consacré, listant l'ensemble des alarmes, anomalies, ou autres événements constatés par l'équipage durant le vol. Les personnels de maintenance disposent de différentes sources documentaires généralement dispersées, et de plusieurs niveaux de documents détaillants les procédures et les différentes tâches individuelles à mener. Certaines alarmes peuvent avoir un impact sur le calcul des performances.

Le terme "NOTAM", en anglais "Notice To Airmen", désigne un type de message destiné au personnel navigant. Les notices NOTAM sont généralement des messages publiés par les systèmes de contrôle de la navigation aérienne dans le but d'informer les pilotes d'évolutions sur les infrastructures. Un NOTAM peut être publié en cas de modification d'une installation au sol, par exemple pour informer ou notifier d'une présence d'obstacles (par exemple une grue ou des zones de travaux) à proximité d'un aéroport. Plus généralement, un NOTAM peut informer au sujet d'un quelconque danger pour la navigation aérienne. Il peut aussi définir des zones interdites de survol. Lors de la préparation d'un vol, le pilote doit consulter ces messages.

Le terme "INOP" correspond aux alarmes émises par le Flight Warning System. Certaines alarmes peuvent avoir un impact sur le calcul de performances.

Le terme "ATC", en anglais "Air Traffic Control" désigne le contrôle du trafic aérien. Le contrôle du trafic aérien est l'un des trois types de services de la circulation aérienne. Il est rendu par des contrôleurs aériens aux aéronefs afin d'aider à l'exécution sûre, rapide et efficace des vols. Il vise à prévenir les collisions entre aéronefs ou entre un aéronef et un obstacle. Il consiste aussi à accélérer et ordonner la circulation aérienne.

Le terme "ATIS", en anglais "Automatic Terminal Information Service", est un service automatique d'information de terminal aéroportuaire. Ce service généralement en boucle des informations importantes sur un aéroport donné (problème de congestion, état de piste, etc).

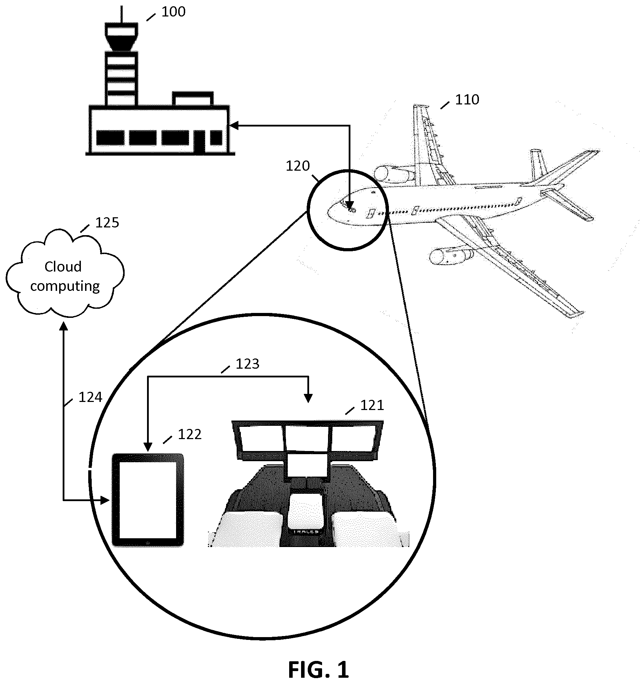

La figure 1 illustre l'environnement technique global de l'invention. Des équipements avioniques ou des moyens aéroportuaires 100 (par exemple une tour de contrôle en lien avec les systèmes de contrôle aérien) sont en communication avec un aéronef 110. Un aéronef est un moyen de transport capable d'évoluer au sein de l'atmosphère terrestre. Par exemple, un aéronef peut être un avion ou un hélicoptère (ou bien encore un drone. L'aéronef comprend une cabine de pilotage ou un cockpit 120. Au sein du cockpit se trouvent des équipements de pilotage 121 (dits équipements avioniques), comprenant par exemple un ou plusieurs calculateurs de bord (moyens de calcul, de mémorisation et de stockage de données), dont un FMS, des moyens d'affichage ou de visualisation et de saisie de données, des moyens de communication, ainsi que (éventuellement) des moyens de retours haptiques. Un EFB 122 peut se trouver à bord, de manière portative ou intégrée dans le cockpit. Ledit EFB peut interagir (communication bilatérale 123) avec les équipements avioniques 121. L'EFB peut également être en communication 124 avec des ressources informatiques externes, accessible par le réseau (par exemple informatique en nuage ou "Cloud computing" 125. En particulier, les calculs peuvent s'effectuer localement sur l'EFB ou de manière partielle ou totale dans les moyens de calculs accessibles par le réseau. Les équipements de bord 121 sont généralement certifiés et régulés tandis que l'EFB 122 et les moyens informatiques connectés 125 ne le sont généralement pas (ou dans une moindre mesure). Cette architecture permet d'injecter de la flexibilité du côté de l'EFB 122 en s'assurant d'une sécurité contrôlée du côté de l'avionique embarquée 121. Plusieurs EFB peuvent être embarqués.

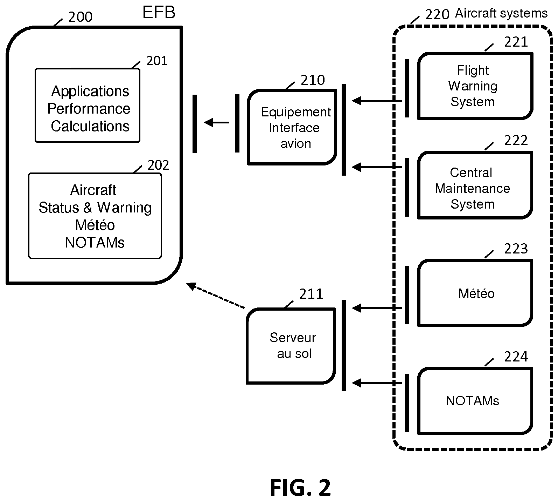

La figure 2 présente une vue d'ensemble du procédé selon l'invention. Dans un mode de réalisation, le procédé est implémenté en tout ou partie sur un ou plusieurs systèmes de type EFB 200. En particulier, un EFB 200 peut comprendre une application (ou fonction au sein d'une application) "Performance Calculations" 201, laquelle peut accéder ou contenir une ou plusieurs bases de données 202, par exemple une base de données "aéroport" ou une base de données "obstacles".

De manière générale, l'ensemble des données peut être collecté/reçu (et traité) automatiquement, par exemple dans l'EFB, délestant le pilote de tâches fastidieuses. Pour ce faire, deux sources de données sont combinées : les systèmes "avion" et les systèmes "sol".

L'EFB 200 peut être relié aux équipements d'interface "avion" 210, qui sont les systèmes opérationnels embarqués, lesquels peuvent chercher et/ou accéder à et/ou traiter différentes sources d'informations (Aircraft Systems 220). Ces sources d'informations peuvent en particulier comprendre :
- des informations de type "contexte avion", principalement via la fonction Flight Warning System 221 ou depuis les écrans de visualisation
- des informations du Centralized Management System (CMS) 222. L'EFB 200 peut être également être relié ou en communication avec les installations aéroportuaires, ou systèmes "sol", par exemple les serveurs au sol 211. Par ce canal, l'EFB peut récupérer des informations supplémentaires, de manière à compléter ou à supplémenter ou corriger ou amender les informations en provenance des systèmes opérationnels embarqués :
- des informations de type météorologique 223 ; à partir des informations météorologiques, l'état des pistes, le vent ou la température peuvent être déterminés est pris en compte dans le calcul de performances;
- des informations de type NOTAM (Notice to Airmen)

Par exemple, les informations de statut avions peuvent être amendées en fonction des informations NOTAMs et des informations météorologiques.

A partir des données avion, la fonction "Performance Calculations" peut déterminer les « items INOPs », et à partir des informations NOTAMs, elle peut déterminer les modifications à apporter à la base de données "obstacles". A partir des données ATC l'application peut déterminer la piste choisie pour faire le calcul. A partir de la *loadsheet* numérique, l'application peut déterminer le poids de l'avion. A partir des données ATIS prétraitées au sol ou digital ATIS, l'application peut déterminer l'état de la piste. Le pilote peut valider ou corriger une ou plusieurs données ou informations ou valeurs ou sélections telles qu'entrées pour le calcul de performances. Une fois l'ensemble des valeurs ou informations vérifiées ou validées, le calcul de performances peut être exécuté ou effectué.

Concrètement, dans un mode de réalisation particulier, la fonction "Performance Calculations" d'une application installée sur l'EFB récupère le "statut avion" et les alarmes associées, les informations météorologiques ainsi que les notices NOTAM. Les données sont ensuite proposées au pilote pour vérification et/ou validation pour procéder au calcul de performances proprement dit.

Concernant le mode de collecte des données 316, un mode de réalisation particulier est décrit ci-après. Une opération de "scraping" correspond à une extraction d'informations au moyen de l'acquisition d'une ou de plusieurs images, et du traitement ultérieur de ces images. L'opération désigne une opération de récupération ou de capture d'informations sur un objet numérique, ladite récupération ou capture n'étant pas prévue d'origine par l'objet numérique. Selon l'invention, cette récupération d'informations comprend l'acquisition d'une ou de plusieurs images puis la reconnaissance de caractères au sein des images capturées.

Une telle opération "opportuniste" de récupération ou d'évasion ou de capture d'informations permet d'établir un lien entre des systèmes avionique certifiés (c'est-à-dire entre autres contrôlés et régulés, plutôt fermés, dont la sécurité informatique est comparativement plus maîtrisée ou à tout le moins surveillée) et les systèmes non avioniques (systèmes ouverts non certifiés, plus sujets à des attaques informatiques mais corrélativement dont les évolutions sont plus rapides). De façon remarquable, l'opération de récupération ou de capture d'informations est unilatérale: l'extraction d'informations s'effectue depuis les systèmes avionique vers les systèmes ouverts (et pas l'inverse). Par exemple, il n'est pas injecté de données et ou de programmes de non-avionique dans les systèmes avionique (ou alors de manière contrôlée)

Dans le présent contexte avionique, plusieurs modes de réalisation sont décrits. Dans un mode de réalisation, le pilote ou le copilote ou un autre personnel navigant déclenche une acquisition d'images, par exemple au moyen de la tablette électronique EFB équipée d'un appareil photo. La prise de vue est ensuite analysée, détourée, et les informations capturées sont extraites de l'image. La connaissance préétablie du type d'image capturée permet une reconnaissance spécifique. Par exemple, une alarme affichée sur le FWS sera selon un format préétabli et connu. Par suite la capture d'informations sera optimisée. Dans une variante, la prise de vue sera de type vidéo (c'est-à-dire acquisition d'une succession d'images fixes, le grand nombre d'images capturées permettant notamment une optimisation de la capture d'informations et/ou une robustesse aux mouvements de l'utilisateur portant les moyens d'acquisition d'images. selon un autre mode de réalisation, les moyens d'acquisition d'images sont montés de manière fixe dans le cockpit de l'aéronef. Par ce moyen, la capture ou la récupération d'informations peut s'effectuer de manière continue. Selon un autre mode de réalisation, les moyens d'acquisition d'images peuvent correspondre à des appareils photo ou des caméras vidéo fixées sur des casques de réalité virtuelle ou augmentée. Un autre moyen d'extraction correspond à de l'extraction de données depuis un flux audio, par reconnaissance vocale ("speech-to-text").

Dans le cas d'espèce, les informations « Alarmes » sont disponibles sur l'écran de visualisation du pilote, et sont également disponibles via le MCDU (Multi purpose display unit) disposé dans le cockpit de l'aéronef, par exemple en consultant les rapports du calculateur de maintenance centralisée. Les données Air Conditionning et Anti-Ice sont souvent des boutons dans le cockpit ou des informations disponibles sur les visualisations d'écran de l'instrumentation embarquée. Les données concernant les pistes actives (par exemple le sens de décollage) est communiqué dans des informations aéroportuaires appelées ATIS et accessible sur écran MCDU ou visualisation. Les données relatives à la piste et à son entrée sont fournies par radio, c'est-à-dire sous forme non visuelle. Dans ce cas, l'extraction de données peut malgré tout avoir lieu par reconnaissance vocale, transcription et traitement des données texte transcrites. Les informations concernant la météo de la piste sont généralement communiquées dans les informations aéroportuaires appelées ATIS et sont accessibles sur écran MCDU ou de visualisation.

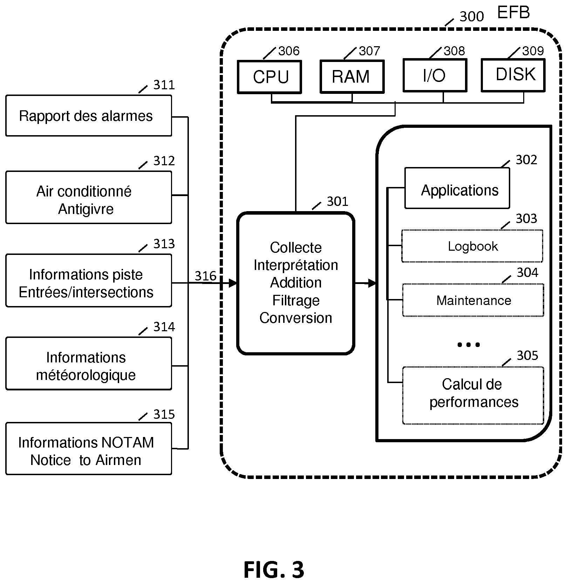

La figure 3 détaille certains aspects du procédé selon l'invention. Un ou plusieurs appareils 300 de type EFB sont en interaction avec plusieurs sources de données, par exemple des données alarmes avion 311, des données relatives à l'air conditionné et les systèmes antigivre 312, des données piste de type entrées et intersections 313, des données météorologiques 314 et des données NOTAM 315. L'EFB recherche et/ou interprète et/ou manipule 301 ces données, de manière à les transmettre à une ou plusieurs applications logicielles (ou fonctions d'application) installées au sein de l'EFB comme par exemple une application ou fonction "Logbook" 303, une application ou fonction "Maintenance" 304, ou bien encore - et précisément - une application "Calcul de performances" 305. Cette dernière application ou fonction conduit en tout ou partie les opérations de manipulation des données 301, lesquelles comprennent (liste non exhaustive) des opérations de collecte et/ou d'interprétation (par exemple au moyen de modèle de protocoles avioniques) et/ou d'ajout (l'EFB peut compléter des données) et/ou de filtrage et/ou de conversion. Matériellement, ces opérations logiques sont permises par des moyens matériels de calcul 306, de mémoire vive ou non persistante 307, d'entrées/sorties I/O 308 de type réseau ou IHM (périphériques de saisie ou de restitution audio-visuelle) et de stockage de masse 309. Les moyens matériels peuvent être implémentés localement et/ou via un accès distant. Par exemple, au moins une partie des moyens de calcul et/ou de stockage peuvent être accessibles par des moyens hébergés dans le réseau ("informatique dans les nuages" ou "Cloud Computing") modulo les exigences en matière de temps de latence, qui eux-mêmes peuvent être optimisés. Le trafic peut être chiffré. Les moyens de visualisation 308 peuvent notamment comprendre un ou plusieurs écrans (par exemple tactiles), et/ou un ou plusieurs projecteurs (y compris laser), et/ou un ou plusieurs casques de réalité virtuelle et/ou augmentée, et/ou un ou plusieurs moyens de retour haptique (e.g. retour de force), et/ou des moyens de sécurisation (e.g. authentification par empreinte digitale ou biométrique ou carte à puce, et/ou des moyens d'acquisition d'images (e.g. appareil photo numérique ou caméra vidéo), et/ou des moyens de saisie de données (e.g. clavier réel ou virtuel ou dictée vocale ou reconnaissance d'écriture par stylet)

Les détails concernant les traitements de données sont décrits ci-après.

Concernant le traitement des "INOP items" (alarmes 311), le système avion (Flight Warning) transmet sur le bus avionique (par exemple A429) le rapport des alarmes. L'équipement interface avion récupère les données du bus avionique et les transmet à l'EFB (via USB ou Ethernet). L'EFB récupère les données, interprète le protocole avionique et récupère les alarmes (code + message). L'EFB filtre les alarmes ayant un impact sur le calcul de performance (par exemple au moyen d'un fichier des alarmes ayant un impact sur le calcul de performance). L'EFB convertit les données d'alarme en données « INOP items » (par exemple au moyen d'un fichier de conversion des alarmes, comprenant un code et un message, en « INOP items). L'EFB complète ensuite le fichier d'entrée du module de calcul de performances.

Concernant le traitement des données "Air Conditioning & Anti-Ice" 312, le système avion transmet sur le bus avionique (A429) ou par discrets le statut des systèmes d'air conditionné et d'anti givre. L'équipement interface avion récupère les données du bus avionique et les transmet à l'EFB (via USB ou Ethernet). L'EFB récupère les données, interprète le protocole avionique et récupère les statuts. L'EFB convertit les statuts des systèmes avion en statut d'entrée du calcul (par exemple au moyen d'un fichier de conversion des statuts). L'EFB complète ensuite le fichier d'entrée du module de calcul de performances.

Concernant le traitement des données de piste, deux solutions peuvent être considérées. Selon une première solution, l'ATC ou l'aéroport ou la compagnie transmet aux systèmes avion l'information de piste et d'entrées/ intersections. L'équipement interface avion récupère les données du bus avionique et les transmet à l'EFB (via USB ou Ethernet). Selon une seconde solution alternative, l'ATC ou l'aéroport ou la compagnie transmet au serveur sol administrant les différents EFBs l'information de piste et d'entrées/ intersections pour les vols de la compagnie. Le serveur sol administrant les EFBs détermine alors le ou les EFBs concernés leur transmet les données (par exemple au moyen d'une base de données associant les vols aux EFBs). L'EFB récupère les données (interprète le protocole avionique si besoin) et récupère les informations piste/ entrées/ intersections pour le vol concerné. L'EFB convertit les données d'alarme en données d'entrée du calcul (par exemple au moyen d'un fichier de conversion des informations piste/ entrées/ intersections)

Concernant le traitement des données météorologiques, les données peuvent être de deux catégories. Les données "Météo Aéroport" comprennent par exemple la direction et la vitesse du vent, la température et la pression locale. Les données "Météo Piste" quant à elles comprennent l'état de la piste (e.g. "dry", "snow"). Deux solutions de collecte des données peuvent être considérées. Selon une première solution, L'ATC ou l'aéroport ou la compagnie transmet aux systèmes avion l'information de météo. L'équipement interface avion récupère les données du bus avionique et les transmet à l'EFB (via USB ou Ethernet). Selon une deuxième solution, l'ATC ou l'aéroport ou la compagnie transmet au serveur sol administrant les EFBs l'information de météo pour les vols de la compagnie. Le serveur sol administrant les EFBs détermine le(s) (I') EFB(s) concerné(s) et lui (leur) transmet les données. Avec l'une ou l'autre des alternatives, l'EFB récupère les données (interprète le protocole avionique si besoin) et récupère les informations Météo Aéroport et Piste pour le vol concerné. L'EFB convertit ensuite les données Météo Aéroport et piste selon la piste retenue en données d'entrée du calcul (éventuellement au moyen d'informations de Piste « Traitement des données de piste » et/ou d'un fichier de conversion des informations météo). L'EFB complète enfin le fichier d'entrée du module de calcul de performances

Concernant le traitement des données NOTAM (Notice To Airmen), les notices peuvent comprendre des données d'entrée relatives à l'aéroport, son type, la piste, le début et la fin de piste. Deux solutions de collecte des données peuvent être considérées. Selon une première solution, L'ATC ou l'aéroport ou la compagnie transmet aux systèmes avion l'information NOTAM. L'équipement interface avion récupère les données du bus avionique et les transmet à l'EFB (via USB ou Ethernet). Selon une deuxième solution, L'ATC ou l'aéroport ou la compagnie transmet au serveur sol administrant les EFBs l'information de NOTAM pour les vols de la compagnie. Le serveur sol administrant les EFBs détermine le ou les EFBs concernés et leur transmet les données. Avec l'une ou l'autre des alternatives, l'EFB récupère les données (interprète le protocole avionique si besoin) et récupère les informations NOTAM pour le vol concerné. L'EFB analyse et filtre les NOTAM pour prendre en compte celles concernant la piste retenue (par exemple au moyen d'Information Piste « Traitement des données de piste »). L'EFB convertit ensuite les données NOTAM en données d'entrée du calcul en lien avec la base de données aéroport utilisé par le module de calcul (par exemple au moyen d'une Base de données aéroport). L'EFB complète le fichier d'entrée du module de calcul de performances.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

## Revendications

1. Procédé mis en oeuvre par ordinateur de calcul de performances pour un aéronef, comprenant les étapes consistant à :
- collecter des données depuis une pluralité de sources de données comprenant des sources de données de type avionique et des sources de données de type non-avionique externes ;
- acquérir une ou plusieurs images dans le cockpit de l'aéronef, ledit cockpit comprenant un ou plusieurs équipements de pilotage comprenant un ou plusieurs écrans de visualisation; lesdites une ou plusieurs images acquises dans le cockpit de l'aéronef comprenant une ou plusieurs images des équipements de pilotage et/ou des écrans de visualisation;
- extraire des données depuis au moins l'une desdites une ou plusieurs images acquises dans le cockpit de l'aéronef par reconnaissance de caractères au sein de ladite image; lesdites données extraites comprenant une ou plusieurs des données comprenant du texte, des valeurs numériques, des positions de curseurs ou de cadrans;
- traiter les données collectées et les données extraites dans un appareil électronique de type EFB ou sac de vol électronique ;
- procéder au calcul de performances avec lesdites données collectées et les données extraites.

2. Procédé selon la revendication 1, l'étape consistant à collecter des données comprenant une étape consistant à extraire des données depuis un flux audio.

3. Procédé selon l'une quelconque des revendications précédentes, les données collectées comprenant une ou plusieurs données de type alarme, INOP, statut avion, air conditionné et antigivre, piste, ATIS, météorologique et/ou NOTAM.

4. Procédé selon la revendication 1, l'étape de traitement comprenant une ou plusieurs opérations parmi des opérations d'interprétation, de filtrage et de conversion de données.

5. Procédé selon la revendication 1, les sources de données avioniques étant transmises par les équipements d'interface de l'aéronef depuis des données issues d'un FPS ou système de planification de vol et/ou d'un CMS ou système de maintenance centralisée.

6. Procédé selon la revendication 1, les sources de données externes étant transmises par un ou plusieurs serveurs sol et les données externes comprenant des données de type météorologiques et/ou de notices NOTAM.

7. Procédé selon la revendication 1, les sources de données externes comprenant en outre des données issues du réseau Internet.

8. Procédé selon la revendication 4, l'opération d'interprétation des données collectées s'effectuant au moyen d'un modèle de protocoles avioniques.

9. Procédé selon la revendication 4, l'opération de conversion des données collectées s'effectuant au moyen d'un fichier de conversion prédéfini.

10. Procédé selon la revendication 1, l'étape consistant à procéder au calcul de performances étant précédée par la réception d'une correction ou de la validation d'une ou de plusieurs données par le pilote pour le calcul de performances.

11. Procédé selon la revendication 1, l'acquisition d'images étant effectuée par prise de vue vidéo.

12. Procédé selon la revendication 1, l'acquisition d'images étant effectuée avec une tablette électronique ou un casque de réalité virtuelle ou augmentée portant des moyens d'acquisition d'images.

13. Procédé selon la revendication 1, les moyens d'acquisition d'images étant montés de manière fixe dans le cockpit de l'aéronef.

14. Système comprenant des moyens pour mettre en oeuvre une ou plusieurs étapes du procédé selon l'une quelconque des revendications 1 à 10.

15. Produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur d'un système selon la revendication 14.

## Patentansprüche

1. Verfahren, durchgeführt von einem Computer, zum Berechnen von Leistungen für ein Luftfahrzeug, das die folgenden Schritte beinhaltet:
- Sammeln von Daten von einer Mehrzahl von Datenquellen, die Datenquellen des avionischen Typs und externe Datenquellen des nicht-avionischen Typs umfassen;
- Erfassen von einem oder mehreren Bildern im Cockpit des Luftfahrzeugs, wobei das Cockpit ein oder mehrere Steuergeräte umfasst, die einen oder mehrere Anzeigebildschirme umfassen; wobei die ein oder mehreren erfassten Bilder im Cockpit des Luftfahrzeugs ein oder mehrere Bilder von Steuergeräten und/oder von Anzeigebildschirmen umfassen;
- Extrahieren der Daten von wenigstens einem der ein oder mehreren erfassten Bilder im Cockpit des Luftfahrzeugs durch Erkennen von Charaktern im Innern des Bildes; wobei die extrahierten Daten ein oder mehrere Daten umfassen, die Text, digitale Werte, Cursor- oder Skalenpositionen umfassen;
- Verarbeiten der gesammelten Daten und der extrahierten Daten in einem elektronischen Apparat des Typs EFB oder elektronischer Pilotenkoffer;
- Durchführen der Berechnung von Leistungen mit den gesammelten Daten und den extrahierten Daten.

2. Verfahren nach Anspruch 1, wobei der Schritt bestehend aus dem Sammeln von Daten einen Schritt bestehend aus dem Extrahieren der Daten aus einem Audiofluss beinhaltet.

3. Verfahren nach einem der vorherigen Ansprüche, wobei die gesammelten Daten ein oder mehrere Daten des Typs Alarm, INOP, Luftfahrtstatuten, klimatisierte Luft und Vereisungsschutz, Piste, ATIS, Meteorologie und/oder NOTAM umfassen.

4. Verfahren nach Anspruch 1, wobei der Schritt des Verarbeitens einen oder mehrere Vorgänge aus Interpretations-, Filterungs- und Datenumwandlungsvorgängen beinhaltet.

5. Verfahren nach Anspruch 1, wobei die Avionikdatenquellen von den Schnittstellengeräten des Luftfahrzeugs von Daten übertragen werden, die von einem FPS oder Flugplanungssystem und/oder einem CMS oder zentralisierten Wartungssystem übertragen werden.

6. Verfahren nach Anspruch 1, wobei die externen Datenquellen von einem oder mehreren Bodenservern übertragen werden und die externen Daten Daten des Typs Meteorologie und/oder Notizen NOTAM umfassen.

7. Verfahren nach Anspruch 1, wobei die externen Datenquellen ferner Daten vom Internet umfassen.

8. Verfahren nach Anspruch 4, wobei der Vorgang des Interpretierens der gesammelten Daten mit Hilfe eines Modells von Avionikprotokollen erfolgt.

9. Verfahren nach Anspruch 4, wobei der Vorgang des Umwandelns von gesammelten Daten mit Hilfe einer vordefinierten Umwandlungsdatei erfolgt.

10. Verfahren nach Anspruch 1, wobei dem Schritt bestehend aus dem Berechnen von Leistungen der Empfang einer Korrektur oder der Validierung von einem oder mehreren Daten durch den Piloten zum Berechnen von Leistungen vorangeht.

11. Verfahren nach Anspruch 1, wobei das Erfassen von Bildern durch Aufnehmen von Videoansichten erfolgt.

12. Verfahren nach Anspruch 1, wobei das Erfassen von Bildern mit einem elektronischen Tablet oder einem Helm mit virtueller oder erweiterter Realität erfolgt, der Bilderfassungsmittel trägt.

13. Verfahren nach Anspruch 1, wobei die Bilderfassungsmittel im Cockpit des Luftfahrzeugs fest montiert sind.

14. System, das Mittel zum Durchführen von einem oder mehreren Schritten des Verfahrens nach einem der Ansprüche 1 bis 10 umfasst.

15. Computerprogrammprodukt, wobei das Computerprogramm Code-Befehle umfasst, so dass die Schritte des Verfahrens nach einem der Ansprüche 1 bis 10 durchgeführt werden können, wenn das Programm auf einem Computer eines Systems nach Anspruch 14 abgearbeitet wird.

## Claims

1. Computer implemented method of computing performance for an aircraft, comprising the steps of:
- collecting data from a plurality of data sources comprising data sources of avionics type and external data sources of non-avionics type;
- acquiring one or more images in the cockpit of the aircraft, said cockpit comprising one or more piloting equipment items comprising one or more viewing screens, said one or more images acquired in the cockpit of the aircraft comprising one or more images of the piloting equipment and/or the viewing screens;
- extracting data from at least one of the one or more images acquired in the cockpit of the aircraft by character recognition within said image, said extracted data comprising one or more data comprising text, numerical values, positions of cursors or dial;
- processing the collected data and the extracted data in an electronic device of EFB or electronic flight bag type;
- undertaking the performance computation with said collected data and extracted data.

2. Method according to claim 1, the step of collecting data comprising a step of extracting data from an audio stream.

3. Method according to any one of the preceding claims, the collected data comprising one or more data of alarm, INOP, aircraft status, air conditioning and anti-ice, runway, ATIS, meteorological and/or NOTAM type.

4. Method according to claim 1, the processing step comprising one or more operations from among operations of interpretation, filtering and conversion of data.

5. Method according to claim 1, the avionics data sources being transmitted by the interface equipment of the aircraft from data arising from an FPS or flight planning system and/or a CMS or centralized maintenance system.

6. Method according to claim 1, the external data sources being transmitted by one or more ground servers and the external data comprising meteorological and/or NOTAM notices type data.

7. Method according to claim 1, the external data sources furthermore comprising data arising from the Internet network.

8. Method according to claim 4, the operation of interpreting the collected data being performed by means of an avionics protocol model.

9. Method according to claim 4, the operation of converting the collected data being performed by means of a predefined conversion file.

10. Method according to claim 1, the step of undertaking the performance computation being preceded by the reception of a correction or of the validation of one or more items of data by the pilot for the performance computation.

11. Method according to claim 1, the acquisition of images being performed by video snapshot.

12. Method according to claim 1, the acquisition of images being performed with a tablet or a virtual or augmented reality headset carrying image acquisition means.

13. Method according to claim 1, the image acquisition means being mounted in a fixed manner in the cockpit of the aircraft.

14. System comprising means for implementing one or more steps of the method according to any one of claims 1 to 10.

15. Computer program product, said computer program comprising code instructions making it possible to perform the steps of the method according to any one of claims 1 to 10, when the said program is executed on a computer of a system according to claim 14.
